# EUROPÄISCHE PATENTSCHRIFT

(11) **EP 1 049 294 B1**
(45) Veröffentlichungstag und Bekanntmachung des Hinweises auf die Patenterteilung: **21.12.2005**
(21) Anmeldenummer: 00201426.4
(22) Anmeldetag: 19.04.2000
(51) Int. Cl.: H04L 12/28, H04L 12/56, H04Q 7/22

(54) **Netzwerk mit mehreren Netzwerk-clustern zur drahtlosen Übertragung von Paketen**
Network with multiple network clusters for wireless communication of packets
Réseau avec plusieurs grappes de réseau pour radiocommunication de paquets

(30) Priorität: 28.04.1999 DE 19919177
(43) Veröffentlichungstag der Anmeldung: 02.11.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, Philips Corp. Intell. Prop. GmbH, 52064 Aachen (DE)
(74) Vertreter: Volmer, Georg

(56) Entgegenhaltungen:
- WO-A-97/24846
- DE-A- 19 742 681
- GROSS B: "INTEGRATION VON GSM UND INTRANET" FUNKSCHAU,DE,FRANZIS-VERLAG K.G. MUNCHEN, Bd. 71, Nr. 18, 21. August 1998 (1998-08-21), Seiten 58-60, XP000847741 ISSN: 0016-2841

## Beschreibung

Die Erfindung bezieht sich auf ein Netzwerk mit mehreren Netzwerk-Clustern aus wenigstens jeweils einem drahtlosen Netzknoten, der zur drahtlosen Übertragung von Paketen in Zeitschlitzen vorgegebener Länge nach einem Zeitmultiplexverfahren vorgesehen ist, deren variable Länge mindestens einen Wert aufweist, der kleiner als die Länge eines fest vorgegebenen Zeitschlitzes ist.

Aus dem Artikel von Bernd Groß: "Integration von GSM und Intranet", Funkschau 18, 1998, Seiten 58 bis 60, ist ein Netzwerk bekannt, das mehrere Netzwerk-Cluster enthält. Ein solcher Netzwerk-Cluster besteht aus einer GSM-Basisstation (GSM = Global System for Mobile Communication) und weiteren Netzwerkeinheiten, wie z.B. einem Gatekeeper, verschiedenen Terminals, einem Gateway usw. Über einen Intranet Mobile Cluster ist die GSM-Basisstation mit einem nach dem Internet-Protokoll arbeitendem Netzwerk (IP-Netzwerk) gekoppelt. Zwischen der GSM-Basisstation und einem Mobiltelefon werden Daten in Paketen übertragen. Die Übertragung erfolgt verbindungsorientiert.

Der Erfindung liegt die Aufgabe zugrunde, ein Netzwerk zu schaffen, bei dem die Übertragung zwischen verschiedenen Netzwerk-Clustern bzw. drahtlosen Netzknoten effizient erfolgt.

Die Aufgabe wird durch ein Netzwerk der eingangs genannten Art dadurch gelöst, daß ein drahtloser Netzknoten zur Zusammenfassung mehrerer Pakete zu einem Superpaket und zur Sendung des Superpakets über eine Punkt-zu-Multipunkt-Verbindung an alle für die Datenübertragung zugelassenen drahtlosen Netzknoten vorgesehen ist und daß ein drahtloser Netzknoten nach Empfang eines Superpaketes zur Entnahme eines Paketes aus dem Superpaket vorgesehen ist, wenn der Bestimmungsort des Paketes im zugeordneten Netzwerk-Cluster liegt.

Das erfindungsgemäße Netzwerk enthält ein aus drahtlosen Netzknoten gebildetes Netzwerk, über das drahtlos Nutzdaten als Pakete mittels eines Zeitmultiplexverfahrens übertragen werden. Die Länge der zu übertragenden Pakete ist meistens kleiner als die Länge der Zeitschlitze. Alle Zeitschlitze weisen die gleiche Länge auf. Die Pakete werden in einem sendenden drahtlosen Netzknoten zu einem Superpaket zusammengefaßt und in wenigstens einen Zeitschlitz eingefügt. Die Zusammenfassung der Pakete zu einem Superpaket erfolgt dabei unabhängig vom Bestimmungsort der Pakete. Ein solches Superpaket wird an alle anderen für die Datenübertragung zugelassenen drahtlosen Netzknoten gesendet. Wer an einer Datenübertragung in dem drahtlosen Netzwerk teilnimmt, entscheidet ein übergeordnetes Managementsystem. Ein drahtloser Netzknoten, der ein Superpaket empfängt, entnimmt aus dem Superpaket die Pakete, deren Bestimmungsort in seinem zugeordneten Netzwerk-Cluster liegt.

Durch die Bildung von Superpaketen wird insbesondere bei Paketen, deren Länge sehr viel kleiner ist als die Länge der Zeitschlitze, die Zeitschlitze optimaler ausgenutzt, als bei der Übertragung jeweils eines Paketes in einem Zeitschlitz. Durch den Aufbau von Punkt-zu-Multipunkt-Verbindungen wird außerdem der Aufwand gegenüber Punkt-zu-Punkt-Verbindungen reduziert, da auf der Sendeseite eine Verwaltung von Verbindungslisten nicht erforderlich ist.

Patentanspruch 2 beschreibt die Segmentierung eines Superpakets, wenn die Länge des Superpakets die Länge der Zeitschlitze überschreitet und Patentanspruch 3 die dynamische Zuweisung von Zeitschlitzen zu segmentierten Superpaketen.

Die Steuerung des Funkverkehrs zwischen den drahtlosen Netzknoten wird von einem der drahtlosen Netzknoten durchgeführt. Dieser Netzknoten wird als zentraler Netzknoten bezeichnet, wie Anspruch 4 zeigt.

Anspruch 5 beschreibt die Entnahme eines für ein Netzwerk-Cluster vorgesehenen Paketes aus einem Superpaket. Hierzu benötigt ein drahtloser Netzknoten eine Tabelle zur Speicherung aller Adressen des zugeordneten Netzwerk-Clusters (vgl. Anspruch 6).

Anspruch 7 gibt eine weitere Aufgabe des Managementsystems an und zwar die Umschaltung von einer Punkt-zu-Multipunkt-Verbindung zu einer Punkt-zu-Punkt-Verbindungen, die in bestimmten Fällen erforderlich ist. Ein drahtloser Netzknoten ist beispielsweise zur Sendung eines Schlüssels über eine Punkt-zu-Multipunkt-Verbindung und von verschlüsselten Daten über eine Punkt-zu-Punkt-Verbindung vorgesehen (Anspruch 8).

Die Erfindung bezieht sich auch auf einen drahtlosen Netzknoten in einem Netzwerk-Cluster eines Netzwerks zur drahtlosen Sendung und zum Empfang von Paketen in Zeitschlitzen vorgegebener Länge nach einem Zeitmultiplexverfahren, wie die Ansprüche 8 und 9 zeigen.

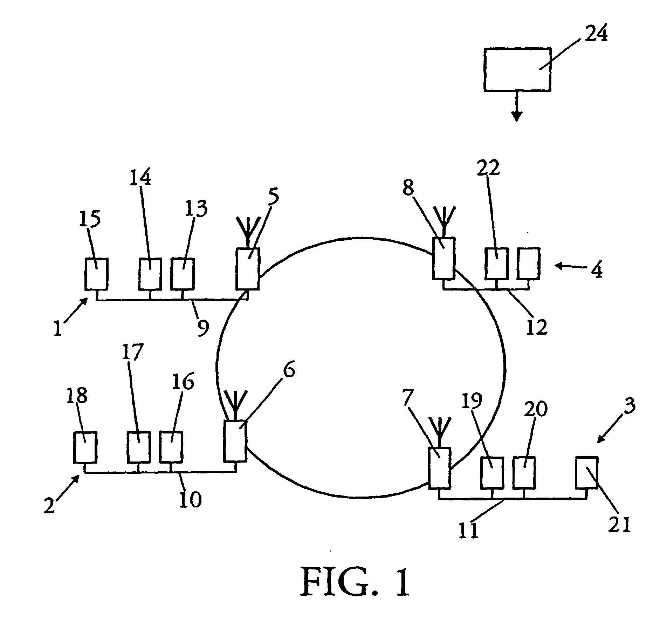

Ein Ausführungsbeispiel der Erfindung wird nachstehend anhand der Fig. 1 näher erläutert, die ein Netzwerk mit mehreren Festnetzknoten und drahtlosen Netzknoten zeigt.

In Fig. 1 ist ein Netzwerk mit mehreren Netzwerk-Clustern 1 bis 4 dargestellt. Ein Netzwerk-Cluster 1 bis 4 besteht aus einem drahtlosen Netzknoten (5 bis 8) und mindestens einem Festnetzknoten (13 bis 23). Unter einem Festnetzknoten (13 bis 23) ist ein Netzknoten zu verstehen, der zu einem Sub-Netzwerk gehört und über drahtgebundene Verbindungen mit anderen Netzknoten. seines Sub-Netzwerks Daten austauscht. Ein draht- . loser Netzknoten (5 bis 8) ist Bestandteil eines drahtlosen Netzwerkes, in welchem drahtlose Netzknoten über ein drahtloses Medium Daten austauschen. Unter einer drahtlosen Übertragung ist eine Funk-, Infrarot-, Ultraschallübertragung etc. zu verstehen.

Bei dem in Fig. 1 dargestellten beispielhaften Netzwerk bilden die drahtlosen Netzknoten 5 bis 8 ein drahtloses Netzwerk, bei dem mittels Funkübertragung Daten über Funkstrekken übermittelt werden. Bei der Funkübertragung wird das TDMA-Verfahren (TDMA = Time Division Multiplex Access) verwendet, mit dessen Hilfe Daten im Zeitmultiplex in Zeitschlitzen eines Rahmens übertragen werden. Diese Zeitschlitze (Kanäle) haben eine feste Länge, d.h. sie können eine bestimmte Anzahl von Bytes pro Zeitschlitz aufnehmen.

Die drahtlosen Netzknoten 5 bis 8 sind jeweils in ihren zugeordneten Netzwerk-Clustern 1 bis 4 über eine drahtgebundene Schnittstelle (9 bis 12) mit mindestens einem Festnetzknoten (13 bis 23) gekoppelt. Solche Festnetzknoten 13 bis 23 können beispielsweise Brücken-Netzknoten darstellen, über die Daten von anderen Brücken-Netzknoten oder den drahtlosen Netzknoten 5 bis 8 in ein diesem Brücken-Netzknoten zugeordnetes Sub-Netzwerk fließen können. Der Netzwerk-Cluster 1 enthält eine Schnittstelle 9, welche den drahtlosen Netzknoten 5 mit den Festnetzknoten 13 bis 15 koppelt. Der drahtlose Netzknoten 6 ist Bestandteil des Netzwerk-Clusters 2 und ist über die Schnittstelle 10 mit den Festnetzknoten 16 bis 18 gekoppelt. Die beiden anderen Netzwerk-Cluster 3 und 4 enthalten den drahtlosen Netzknoten 7 und die Festnetzknoten 19 bis 21 (Netzwerk-Cluster 3) und den drahtlosen Netzknoten 8 und die Festnetzknoten 22 und 23 (Netzwerk-Cluster 4). In dem Netzwerk-Cluster 3 sind die Netzknoten 7 und 19 bis 21 über die Schnittstelle 11 und im Netzwerk-Cluster 4 die Netzknoten 8, 22 und 23 über die Schnittstelle 12 miteinander gekoppelt. Das drahtlose Netzwerk, welches aus den drahtlosen Netzknoten 5 bis 8 besteht, ist zur Übertragung von Daten zwischen den einzelnen Netzwerk-Clustern 1 bis 4 vorgesehen.

Ein drahtloser Netzknoten 5 bis 8 besteht im wesentlichen aus einer Funkvorrichtung. Solche hier nicht näher dargestellten Funkvorrichtungen sind bekannt und enthalten in der Regel eine Schnittstellenschaltung, eine Protokollvorrichtung, ein Modem, eine Hochfrequenzschaltung und eine Antenne. Die Schnittstellenschaltung, die eine Formatanpassung von empfangenen Daten durchführt, ist an eine drahtgebundene Schnittstelle (9 bis 12) angeschlossen und tauscht mit der Schnittstelle und der Protokollvorrichtung Daten aus. Die Protokollvorrichtung, die beispielsweise als Prozessorsystem ausgebildet ist, bearbeitet die von der Schnittstellenschaltung oder dem Modem empfangene Daten nach Protokollen für die LLC-Schicht (LLC = Logical Link Control) und die MAC-Schicht (MAC = Medium Access Control). Die MAC-Schicht steuert den Mehrfachzugriff einer Funkvorrichtung zum Funkübertragungsmedium und die LLC-Schicht führt eine Fluß- und Fehlerkontrolle durch. Von der Antenne empfangene Daten sendet die Hochfrequenzschaltung über das Modem zur Protokollvorrichtung. Ferner strahlt die Antenne von der Protokollvorrichtung stammende und von dem Modem und der Hochfrequenzschaltung weitergeleitete Daten aus.

In dem durch die Netzknoten 5 bis 8 gebildeten drahtlosen Netzwerk hat beispielsweise der drahtlose Netzknoten 5 die Funktion einer Basisstation in dem drahtlosen Netzwerk und wird als zentraler Netzknoten bezeichnet. Der drahtlose Netzknoten 5 steuert den Funkverkehr in dem drahtlosen Netzwerk, d.h. der zentrale Netzknoten 5 steuert die Funksynchronisation, den Mehrfachzugriff (medium access control), den Verbindungsaufbau etc. Für die Übertragung der Nutzdaten im drahtlosen Netzwerk wird ein verbindungsorientiertes Paketübertragungsverfahren verwendet. Ein solches Paketübertragungsverfahren ist beispielsweise beim Internet-Protokoll vorgesehen.

Bevor Nutzdaten in Paketen über das drahtlose Netzwerk übertragen werden wird von dem zentralen Netzknoten 5 eine Verbindung aufgebaut. Ein Netzknoten 6, 7 oder 8 meldet dem zentralen Netzknoten 5 zu welchem Netzknoten Pakete, die in einen oder mehrere Zeitschlitze fester Länge untergebracht werden, übertragen werden. Der zentrale Netzknoten weist einem Netzknoten 6, 7 oder 8 einen oder mehrere Zeitschlitze mit einer bestimmten Identifikationsnummer ID zu. Hierbei kann sich der Netzknoten 5 auch selbst einen oder mehrere Zeitschlitze mit einer Identifikationsnummer ID zuweisen, wenn dieser Pakete zu anderen Netzknoten übertragen möchte. Hierbei muß vorausgesetzt werden, daß zuvor von einem übergeordneten Managementsystem 24 festgelegt worden ist, welche Netzwerk-Cluster Pakete miteinander austauschen. Nur zu diesen Netzwerk-Clustern können Verbindungen aufgebaut werden.

Es sei vorausgesetzt, daß die Länge der Pakete in der Mehrzahl der Fälle kleiner ist als die Länge der Zeitschlitze und daß die verschiedenen Pakete nicht nur zu einem bestimmten Netzwerk-Cluster 1 bis 4 gesendet werden müssen. Erfindungsgemäß bildet ein drahtloser Netzknoten (5, 6, 7 oder 8) aus den Paketen ein Superpaket und sendet dieses Superpaket nach einem Verbindungsaufbau über eine Punkt-zu-Multipunkt-Verbindung zu allen anderen drahtlosen Netzknoten (5, 6, 7 und/oder 8) bzw. Netzwerk-Clustern (1, 2, 3 und/oder 4).

Ein Paket enthält ein Nutzdatenfeld für den Transport von Nutzdaten und ein Kopffeld für eine Adressenkennung, die den Bestimmungsort eines Paketes angibt. Ein Bestimmungsort ist ein in einem Netzwerk-Cluster 1 bis 4 liegender Netzknoten oder andere hier nicht näher beschriebene Netzwerkeinheiten.

Beispielsweise weist der zentrale Netzknoten 5 zur Übertragung eines Superpaketes vom Netzknoten 6 zu den Netzknoten 5, 7 und 8 diesem einen Kanal mit der ID = 1 für eine Punkt-zu-Multipunkt-Verbindung und zur Übertragung eines Superpaketes vom Netzknoten 8 zu den Netzknoten 5, 6 und 7 diesem einen Kanal mit der ID = 2 für eine Punkt-zu-Multipunkt-Verbindung zu.

Nachdem ein drahtloser Netzknoten 5, 6, 7 oder 8 ein Superpaket empfangen hat, wird überprüft, ob eine Adressenkennung in einem Paket einer Adresse in dem betreffenden Netzwerk-Cluster 1, 2, 3 oder 4 entspricht. Falls die Adressenkennung und die Adresse eines Netzknotens oder einer Netzwerkeinheit in dem Netzwerk-Cluster übereinstimmen, entnimmt der drahtlose Netzknoten (5, 6, 7 oder 8) das Paket, welches die Adressenkennung enthält. Ein drahtloser Netzknoten enthält eine Tabelle, in der alle Adressen seines zugeordneten Netzwerk-Clusters aufgeführt sind.

Ein Zeitschlitz für eine Punkt-zu-Multipunkt-Verbindung hat eine bestimmte vorgegebene feste Länge oder Kapazität. Beispielsweise kann ein solcher Zeitschlitz 48 Bytes aufnehmen. Überschreitet das aus mehreren Paketen zusammengesetzte Superpaket die Länge des Zeitschlitzes, wird das Superpaket in Zellen segmentiert und die Zellen über mehrere Zeitschlitze verteilt. Der zentrale Netzknoten 5 ordnet die Zeitschlitze einem in Zellen segmentierten Superpaket dynamisch zu, d.h. diese Zellen werden in mehrere Zeitschlitze eines Rahmens oder in einen oder mehrere Zeitschlitze mehrerer Rahmen eingefügt. Hierbei kann es vorkommen, daß die Länge der letzten Zelle kleiner als die Länge des Zeitschlitzes ist während die Länge der zuvor gesendeten Zelle gleich der Länge eines Zeitschlitzes ist. Eine Zelle, dessen Länge kleiner ist als die Länge des Zeitschlitzes, wird mit Bits aufgefüllt, die keine Bedeutung haben. Solche Bits ohne Bedeutung werden Leer-Bits genannt. Alle Netzknoten, die Zellen eines Superpaketes empfangen, setzen aus den empfangenen Zellen das Superpaket zusammen. Die Zusammensetzung wird beispielsweise anhand einer Zellenkennung in einer Zelle vorgenommen. Aus dem Superpaket werden wiederum die einzelnen Pakete zurückgewonnen und ein Paket, welches eine Adressenkennung enthält, die der Adresse eines Netzknotens oder einer Netzwerkeinheit des Netzwerk-Clusters 1 bis 4 entspricht, wird zur Weiterverarbeitung weitergeleitet. Die für einen Netzknoten oder einer Netzwerkeinheit eines Netzwerk-Clusters 1 bis 4 vorgesehenen Pakete werden von dem zugeordneten drahtlosen Netzknoten 5 bis 8 weitergeleitet. Die restlichen Pakete des Superpaketes, deren Adressenkennungen nicht mit Bestimmungsorten im Netzwerk-Cluster 1 bis 4 des das Superpaket empfangenden drahtlosen Netzknotens 5 bis 8 übereinstimmen, werden gelöscht.

Beispielsweise liegen sechs Pakete vor, die 10, 20, 20, 40, 30 und 40 Byte aufweisen. Aus diesen Paketen wird ein Superpaket mit 160 Byte gebildet. Die Kanalkapazität betrage 48 Bytes. Das Superpaket wird in 4 Zellen aufgeteilt. Drei Zellen enthalten 48 Bytes und die letzte Zelle 16 Bytes mit Nutzdaten. Diese letzte Zelle wird mit Leer-Bits aufgefüllt.

Durch die Bildung von Superpaketen wird die vorhandene Kanalkapazität optimaler ausgenutzt, als beispielsweise bei einer Übertragung jeweils immer eines Paketes über einen Kanal. Des weiteren ist durch den ausschließlichen Aufbau von Punkt-zu-Multipunkt-Verbindungen eine Verwaltung von Tabellen in einem drahtlosen Netzknoten 5 bis 8 für den Verbindungsaufbau nicht erforderlich.

Es ist für bestimmte Anwendungen möglich, eine Punkt-zu-Punkt-Verbindung anstatt einer Punkt-zu-Multipunkt-Verbindung aufzubauen. Solche Anwendungen sind dann gegeben, wenn Pakete übertragen werden sollen, die in der Mehrzahl der Fälle größer als die Länge der fest vorgegebenen Zeitschlitze sind. Diese Entscheidung wird von dem u.a. die drahtlosen Netzknoten 5 bis 8 steuernden übergeordneten Managementsystem 24 durchgeführt und ein drahtloser Netzknoten 5 bis 8 kann eine Punkt-zu-Punkt-Verbindung oder Punkt-zu-Multipunkt-Verbindung anhand einer Steuerinformation im Steuerfeld des Paketes identifizieren.

Eine Punkt-zu-Punkt-Verbindung sollte auch dann aufgebaut werden, wenn nur zwischen zwei drahtlosen Netzwerken verschlüsselte Daten übertragen werden, die von den anderen drahtlosen Netzknoten nicht erkannt werden dürfen- Hierbei wird zuvor beispielsweise von dem zentralen drahtlosen Netzknoten 5 über eine Punkt-zu-Multipunkt-Verbindung der Schlüssel zur Entschlüsselung von verschlüsselten Daten an alle anderen drahtlosen Netzknoten 6 bis 8 gesendet.

## Patentansprüche

1. Netzwerk mit mehreren Netzwerk-Clustern aus wenigstens jeweils einem drahtlosen Netzknoten, der zur drahtlosen Übertragung von Paketen in Zeitschlitzen vorgegebener Länge nach einem Zeitmultiplexverfahren vorgesehen ist, deren variable Länge mindestens einen Wert aufweist, der kleiner als die Länge eines fest vorgegebenen Zeitschlitzes ist,
**dadurch gekennzeichnet,**
**daß** ein drahtloser Netzknoten zur Zusammenfassung mehrerer Pakete zu einem Superpaket und zur Sendung des Superpakets über eine Punkt-zu-Multipunkt-Verbindung an alle für die Datenübertragung zugelassenen drahtlosen Netzknoten vorgesehen ist und daß ein drahtloser Netzknoten nach Empfang eines Superpaketes zur Entnahme eines Paketes aus dem Superpaket vorgesehen ist, wenn der Bestimmungsort des Paketes im zugeordneten Netzwerk-Cluster liegt.

2. Netzwerk nach Anspruch 1,
**dadurch gekennzeichnet,**
**daß** ein drahtloser Netzknoten
- zur Segmentierung eines Superpakets in Zellen vorgesehen ist, wenn die Länge des Superpakets die Länge der fest vorgegebenen Zeitschlitze überschreitet,
- zur Einfügung der Zellen in mehrere Zeitschlitze vorgesehen ist und
**daß** ein Zellen empfangender drahtloser Netzknoten zur Bildung eines Superpakets aus empfangenen Zellen vorgesehen ist.

3. Netzwerk nach Anspruch 2,
**dadurch gekennzeichnet,**
**daß** ein drahtloser Netzknoten zur Einfügung der Zellen in mehrere Zeitschlitze eines Rahmens oder in einen oder mehrere Zeitschlitze von mehreren Rahmen vorgesehen ist.

4. Netzwerk nach Anspruch 1,
**dadurch gekennzeichnet,**
**daß** einer der drahtlosen Netzknoten des ein drahtloses Netzwerk bildenden drahtlosen Netzknoten als zentraler Netzknoten ausgebildet ist, der zur Steuerung des Funkverkehrs vorgesehen ist.

5. Netzwerk nach Anspruch 1,
**dadurch gekennzeichnet,**
**daß** ein drahtloser Netzknoten, welcher ein Paket erhält, zum Vergleich der Adressenkennung im Steuerfeld des Pakets mit einer dem zugeordneten Netzwerk-Cluster zugehörigen den Bestimmungsort angebenden Adresse vorgesehen ist.

6. Netzwerk nach Anspruch 5,
**dadurch gekennzeichnet,**
**daß** ein drahtloser Netzknoten eine Tabelle zur Speicherung aller Adressen des zugeordneten Netzwerk-Clusters enthält.

7. Netzwerk nach Anspruch 1,
**dadurch gekennzeichnet,**
**daß** das Netzwerk ein Managementsystem enthält, welches bei bestimmten Anwendungen einen drahtlosen Netzknoten so steuert, daß dieser an Stelle von Punkt-zu-Multipunkt-Verbindungen nur zum Aufbau von Punkt-zu-Punkt-Verbindungen vorgesehen ist.

8. Netzwerk nach Anspruch 7,
**dadurch gekennzeichnet,**
**daß** von ein drahtloser Netzknoten zur Sendung eines Schlüssels über eine Punkt-zu-Multipunkt-Verbindung und von verschlüsselten Daten über eine Punkt-zu-Punkt-Verbindung vorgesehen ist.

9. Drahtloser Netzknoten in einem Netzwerk-Cluster eines Netzwerks, der zur drahtlosen Sendung von Paketen in Zeitschlitzen vorgegebener Länge nach einem Zeitmultiplexverfahren vorgesehen ist, deren variable Länge mindestens einen Wert aufweist, der kleiner als die Länge eines fest vorgegebenen Zeitschlitzes ist,
**dadurch gekennzeichnet,**
**daß** der drahtlose Netzknoten zur Zusammenfassung mehrerer Pakete zu einem Superpaket und zur Sendung des Superpakets über eine Punkt-zu-Multipunkt-Verbindung an alle für die Datenübertragung zugelassenen drahtlosen Netzknoten vorgesehen ist.

10. Drahtloser Netzknoten in einem Netzwerk-Cluster eines Netzwerks, der zum drahtlosen Empfang von Paketen in Zeitschlitzen vorgegebener Länge nach einem Zeitmultiplexverfahren vorgesehen ist, deren variable Länge mindestens einen Wert aufweist, der kleiner als die Länge eines fest vorgegebenen Zeitschlitzes ist,
**dadurch gekennzeichnet,**
**daß** der drahtlose Netzknoten nach Empfang eines Superpaketes zur Entnahme eines Paketes aus dem Superpaket vorgesehen ist, wenn der Bestimmungsort des Paketes im zugeordneten Netzwerk-Cluster liegt.

## Claims

1. A network with several network clusters of at least one wireless network node each, which network node is designed for the wireless transmission of packets in time slots of given length in a time multiplex process, the variable length of said packets having at least a value which is smaller than the length of a fixedly given time slot,
**characterized in that** a wireless network node is provided for combining several packets into a superpacket and for transmitting the superpacket to all wireless network nodes authorized for the data transmission via a point-to-multipoint link, and
**in that** a wireless network node after reception of a superpacket is designed to derive a packet from the superpacket if the destination of the packet lies in the relevant associated network cluster.

2. A network as claimed in claim 1, **characterized in that** a wireless network node
- is designed for segmenting a superpacket into cells if the length of the superpacket exceeds the length of the fixedly given time slots,
- is designed for inserting the cells into several time slots, and
**in that** a wireless network node which receives cells is designed for forming a superpacket from received cells.

3. A network as claimed in claim 2, **characterized in that** a wireless network node is designed for inserting the cells into several time slots of a frame or into one or several time slots of several frames.

4. A network as claimed in claim 1, **characterized in that** one of the wireless network nodes from among the wireless network nodes which form a wireless network is constructed so as to form a central node which is designed to control the radio traffic.

5. A network as claimed in claim 1, **characterized in that** a wireless network node which receives a packet is designed for comparing the address identification in the control field of the packet with an address which belongs to the associated network cluster and which identifies the destination.

6. A network as claimed in claim 5, **characterized in that** a wireless network node contains a table for the storage of all addresses of the associated network cluster.

7. A network as claimed in claim 1, **characterized in that** the network comprises a management system which for certain applications controls a wireless network node such that this node provides the establishment of point-to-point connections only instead of point-to-multipoint connections.

8. A network as claimed in claim 7, **characterized in that** a wireless network node is designed for sending a key via a point-to-multipoint connection and for sending coded data via a point-to-point connection.

9. A wireless network node in a network cluster of a network, which node is designed for the wireless transmission of packets in time slots of given length in a time multiplex process, the variable length of said packets having at least a value which is smaller than the length of a fixedly given time slot,
**characterized in that** the wireless network node is designed for combining several packets into a superpacket and for transmitting said superpacket via a point-to-multipoint connection to all wireless network nodes authorized for the data transmission.

10. A wireless network node in a network cluster of a network, which node is designed for the wireless reception of packets in time slots of given length in a time multiplex process, the variable length of said packets having at least a value which is smaller than the length of a fixedly given time slot,
**characterized in that** the wireless network node is designed so as to derive a packet from a superpacket after reception of this superpacket if the designation of the packet lies within the relevant associated network cluster.

## Revendications

1. Réseau avec plusieurs grappes de réseau à partir d'au moins un noeud de réseau sans fil respectif qui est prévu pour la transmission sans fil de paquets dans des fentes temporelles de longueur préalablement déterminée selon un procédé de multiplexage temporel dont la longueur variable présente au moins une valeur qui est inférieure à la longueur d'une fente temporelle préalablement déterminée
**caractérisé en ce**
**qu'**un noeud de réseau sans fil est prévu pour la combinaison de plusieurs paquets en un superpaquet et pour la transmission du superpaquet par l'intermédiaire d'une liaison point à multipoints à tous les noeuds de réseau sans fil admis pour la transmission de données et
**qu'**un noeud de réseau sans fil est prévu après la réception d'un superpaquet pour le prélèvement d'un paquet à partir du superpaquet lorsque le lieu de destination du paquet est présent dans la grappe de réseau affectée.

2. Réseau selon la revendication 1,
**caractérisé en ce**
**qu'**un noeud de réseau sans fil
- est prévu pour la segmentation d'un superpaquet dans des cellules lorsque la longueur du superpaquet dépasse la longueur des fentes temporelles déterminées préalablement,
- est prévu en vue de l'intégration des cellules dans plusieurs fentes temporelles et qu'un noeud de réseau sans fil recevant les cellules est prévu pour la formation d'un superpaquet à partir des cellules reçues.

3. Réseau selon la revendication 2,
**caractérisé en ce**
**qu'**il est prévu un noeud de réseau sans fil pour l'intégration des cellules dans plusieurs fentes temporelles d'un cadre ou dans une ou plusieurs fentes temporelles de plusieurs cadres.

4. Réseau selon la revendication 1,
**caractérisé en ce**
**qu'**un des noeuds de réseau sans fil du noeud de réseau sans fil formant un réseau sans fil est conçu comme un noeud de réseau central qui est prévu pour la commande du trafic radio.

5. Réseau selon la revendication 1,
**caractérisé en ce**
**qu'**un noeud de réseau sans fil qui reçoit un paquet est prévu pour la comparaison de l'identification d'adresse dans la zone de commande du paquet avec une adresse indiquant le lieu de destination appartenant à la grappe de réseau affectée.

6. Réseau selon la revendication 5,
**caractérisé en ce**
**qu'**un noeud de réseau sans fil contient un tableau pour l'enregistrement de toutes les adresses de la grappe de réseau affectée.

7. Réseau selon la revendication 1,
**caractérisé en ce**
**que** le réseau contient un système de gestion qui commande un noeud de réseau sans fil pour certaines applications de telle sorte que celui-ci soit prévu uniquement pour l'établissement de liaisons point à point au lieu de liaison point à multipoints.

8. Réseau selon la revendication 7,
**caractérisé en ce**
**qu'**il est prévu un noeud de réseau sans fil pour la transmission d'un code par l'intermédiaire d'une liaison point à multipoints et de données codées par l'intermédiaire d'une liaison point à point.

9. Noeud de réseau sans fil dans une grappe de réseau d'un réseau qui est prévu pour la transmission sans fil de paquets dans des fentes temporelles de longueur préalablement déterminée selon un procédé de multiplexage temporel dont la longueur variable présente au moins une valeur qui est inférieure à la longueur de la fente temporelle fixée préalablement déterminée,
**caractérisé en ce**
**que** le noeud de réseau sans fil est prévu pour la combinaison de plusieurs paquets en un superpaquet et pour la transmission du superpaquet par l'intermédiaire d'une liaison point à multipoints sur tous les noeuds de réseau sans fil admis pour la transmission de données.

10. Noeud de réseau sans fil dans une grappe de réseau d'un réseau qui est prévu pour la transmission sans fil de paquets dans des fentes temporelles de longueur préalablement déterminée selon un procédé de multiplexage temporel dont la longueur variable présente au moins une valeur qui est inférieure à la longueur de la fente temporelle fixée préalablement déterminée,
**caractérisé en ce**
**que** le noeud de réseau sans fil est prévu après la réception d'un superpaquet pour le prélèvement d'un paquet à partir du superpaquet lorsque le lieu de destination du paquet se trouve dans la grappe de réseau affectée.
